# EUROPEAN PATENT SPECIFICATION

(11) **EP 2 483 534 B1**
(45) Date of publication and mention of the grant of the patent: **22.07.2015**
(21) Application number: 09764570.9
(22) Date of filing: 01.10.2009
(51) Int. Cl.: F01N 3/20, F02B 37/18

(54) **EXHAUST LINE ASSEMBLY AND INTERNAL COMBUSTION ENGINE COMPRISING AN EXHAUST LINE ASSEMBLY**
ABGASLEITUNGSANORDNUNG UND VERBRENNUNGSMOTOR MIT ABGASLEITUNGSANORDNUNG
SYSTEME DE LIGNE D'ECHAPPEMENT ET MOTEUR A COMBUSTION INTERNE AVEC SYSTEME DE LIGNE D'ECHAPPEMENT

(43) Date of publication of application: 08.08.2012
(73) Proprietor: Volvo Lastvagnar AB, 405 08 Göteborg (SE)
(72) Inventor: AUFFRET, Nicolas, 51510 Competrix (FR); DRONNIOU, Nicolas, F-78000 Versailles (FR)
(74) Representative: Faucheux, Jérôme
(86) International application number: PCT/IB2009/007200
(87) International publication number: WO 2011/039557

(56) References cited:
- EP-A2- 2 075 050
- WO-A1-2009/023708
- DE-A1- 19 855 384

## Description

### TECHNICAL FIELD

The present invention relates to an exhaust line assembly for the treatment of exhaust gases produced in an internal combustion engine. Besides, the present invention relates to an internal combustion engine system having an internal combustion engine and equipped with such an exhaust line assembly. The present invention can be used for example in an exhaust line of a diesel engine of an automotive vehicle, wherein a urea solution is injected to achieve an after treatment of the exhaust gases.

### BACKGROUND

The combustion of fuel in an internal combustion engine produces exhaust gases, which contain some undesirable or hazardous substances, like nitrogen oxides (NOx), carbon monoxide (CO), un-burnt hydrocarbons (HC) and, especially within diesel engine, various particulate substances like soot.

Since the exhaust gases are released into the atmosphere, an internal combustion engine is usually equipped with various after treatment systems in order to decrease the amount of undesirable or hazardous substances contained in the exhaust gases.

Among exhaust gases after treatment systems, selective catalytic reduction (SCR) reduces nitrogen oxides (NOx) into water and nitrogen, which are both non hazardous substances. In a selective catalytic reduction (SCR), a aqueous solution of urea is injected and sprayed in an injection space located upstream of the catalytic converter. Then, the urea solution vaporizes in contact with the hot exhaust gases, and decomposes, thus producing ammonia, which in turn, in a suitable catalytic unit, may react with nitrogen oxides (NOx) to form water and nitrogen gas (N₂).

However, the injected urea can crystallize before becoming ammonia, in particular when the exhaust gases temperature is too low. Such a crystallization of urea can result in the formation of a solid deposit on the walls of the exhaust line and eventually in the clogging of the exhaust line. Besides, the efficiency of conversion of nitrogen oxides (NOx) into water and nitrogen gas (N₂) depends on the exhaust gases temperature where urea solution is injected and sprayed and where ammonia produced will react with exhaust gases.

In order to increase or keep high the ambient temperature in the mixing device, US-A-2005/188682 describes an exhaust line assembly comprising a collecting duct, a turbine having its inlet connected to the collecting duct, an exhaust conduit collecting exhaust gases flowing out of the turbine and a bypass duct bridging the turbine in order derive a bypass portion of exhaust gases towards the catalytic converter. More accurately, the bypass duct opens into the exhaust conduit directly upstream of the catalytic converter. The bypass portion of exhaust gases has a higher temperature than the exhaust gases flowing out the turbine.

However, such a prior art exhaust line assembly does not address the problem of optimizing the vaporization and the decomposition of the urea, which may particularly arise during cold starts of the internal combustion engine or at small engine torques with low loaded duty cycles.

DE 198 55 384 discloses an exhaust line assembly where fuel is injected in a turbine bypass conduit.

### SUMMARY

One object of the present invention is to overcome the here-above mentioned drawbacks, by providing an exhaust line assembly achieving a relatively high ambient temperature to promote urea evaporation and to avoid urea crystallization.

To achieve this object, the subject matter of the present invention is an exhaust line assembly, for the treatment of exhaust gases produced in an internal combustion engine, said exhaust line assembly comprising:
- a collecting duct for collecting the exhaust gases of the internal combustion engine;
- a turbine having a turbine inlet connected to the collecting duct;
- an exhaust conduit arranged to collect exhaust gases flowing out of the turbine;
- a bypass duct connected to the collecting duct and to the exhaust conduit so as to by-pass the turbine and to derive a bypass portion of exhaust gases, while a main portion of exhaust gases flows through the turbine;
wherein said exhaust line assembly also comprises injection means arranged to inject a fluid inside an injection space, characterized in that the injection space is defined in the exhaust conduit; and wherein a downstream part of the bypass duct discharges at least part of the bypass portion of exhaust gases in or around the injection space.

According to advantageous but optional features, considered on their own or in any technically feasible combination:
- the injection space is surrounded by a surrounding space in the exhaust conduit, and the bypass portion and the main portion of the exhaust gases are injected essentially separately each in one of said spaces;
- the injection space and the surrounding space are physically separated;
- the exhaust conduit comprises a first pipe and a second pipe, a downstream part of the first pipe being surrounded by the second pipe so that the first pipe and the second pipe delimit a surrounding space for one of the bypass portion or of the main portion of the exhaust gases to pass through, the injection space being defined by the walls of the first pipe;
- the first pipe is connected to a turbine outlet while the second pipe is connected to the bypass duct, whereby the main portion of exhaust gases flows in the injection space while the bypass portion flows in the surrounding space;
- the first pipe is connected to the bypass duct while the second pipe is connected to a turbine outlet, whereby the bypass portion of exhaust gases flows in the injection space while the main portion flows in the surrounding space;
- the first pipe and the second pipe have cylindrical shapes and are preferably coaxial;
- the injection space and the surrounding space are not physically separate but are demarcated by the essentially separate flows of the bypass portion and of the main portion of the exhaust gases in and around the injection space;
- the injection means comprise a nozzle, the downstream part of the bypass duct being arranged to deliver the bypass portion around the nozzle;
- the main portion of exhaust gases is injected around the flow of the bypass portion substantially coaxially with the flow of the bypass portion and with the flow of urea injected by the nozzle;
- the main portion of exhaust gases is injected so as to create a swirl flow around the flow of the bypass portion of exhaust gases;
- the injection means comprise a nozzle located axially in the exhaust duct where the main portion of exhaust gases flows, and a series of nozzles is arranged all around in the exhaust conduit to deliver the bypass portion around the injection space;
- a valve is mounted onto the bypass duct so as to control the flow of the bypass portion therein;
- the bypass duct is connected upstream of the turbine inlet, the bypass duct being formed of a pipe distant from the turbine, or wherein the bypass duct is connected close to the turbine inlet, an upstream part of the bypass duct being integral with a casing of the turbine;

Besides, a subject matter of the present invention is an internal combustion engine system having an internal combustion engine and equipped with an exhaust line assembly according to the invention.

### BRIEF DESCRIPTION OF THE DRAWINGS

The present invention and its advantages will be well understood on the basis of the following description, which is given as an illustrative example, without restricting the scope of the invention and in relation with the annexed drawings, among which:
- figure 1 is a general schematic view of an exhaust line assembly according to the present invention;
- figure 2 is a cross-section of a sub-assembly of an exhaust line assembly according to a first embodiment of the present invention;
- figure 3 is a cross-section similar to figure 2 of a sub-assembly of an exhaust line assembly according to a second embodiment;
- figure 4 is a schematic representation similar to figure 1 of an alternative embodiment of the present invention;
- figure 5 is a cross-section of a sub-assembly of an exhaust line assembly according to a third embodiment of the present invention; and
- figure 6 is a view along direction B of figure 5.

### DETAILED DESCRIPTION OF SOME EMBODIMENTS

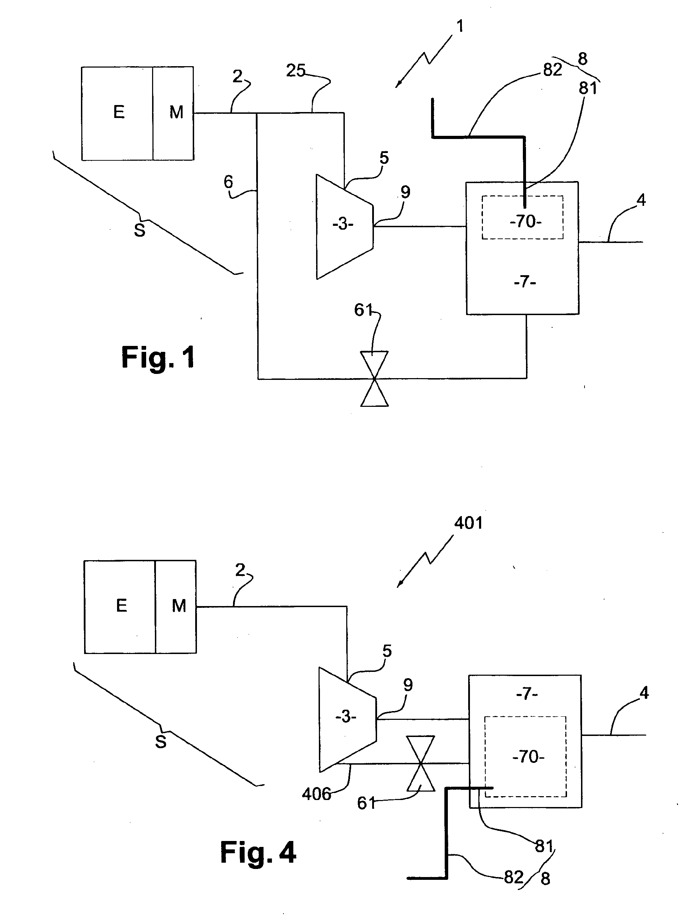

Figure 1 depicts an exhaust line assembly 1 according to the invention and comprising an exhaust gases collecting duct 2, a turbine 3, and an exhaust conduit 4 arranged to collect exhaust gases flowing out of turbine 3. The collecting duct 2 is located downstream of an exhaust manifold M of an internal combustion engine E, so as to collect exhaust gases thereof. The collecting duct 2 can be made of a single tube. Turbine 3 has a turbine inlet 5, which is connected to the collecting duct 2 by way of an inlet pipe 25.

Exhaust line assembly 1 further comprises a bypass duct 6, which is connected to the collecting duct 2 and to the exhaust conduit 4. Thus, bypass duct 6 bridges the turbine 3 and derives a bypass flow 13 or bypass portion of exhaust gases from collecting duct 2 to exhaust conduit 4. The bypass duct 6 of figure 1 can be formed of a pipe distant and independent from the turbine 3, i.e. the bypass duct 6 is connected upstream of the turbine inlet 5 and directly to the collecting duct 2. Such a bypass duct 6 can have a relatively large section, so as to derive large flow rates. A bypass valve 61 is mounted onto the bypass duct 6 so as to control the bypass flow 13 or bypass portion of exhaust gases into the bypass duct 6.

Exhaust line assembly 1 also comprises a mixing device 7, where an aqueous solution of urea is injected and where the ammonia produced therefrom is mixed with the exhaust gases. Mixing device 7 is connected downstream of an outlet 9 of turbine 3, so that the all of the flow rate of exhaust gases which flows out of turbine 3 passes through the mixing device 7. Mixing device 7 can simply be a dedicated portion of the exhaust conduit.

In the present application, the terms "downstream" and "upstream" refer to the main direction of flow of exhaust gases in a respective duct or conduit.

Mixing device 7 is equipped with injection means 8 for the injection of the urea solution. Injection means 8 may comprise a nozzle 81, for injecting a urea solution inside an injection space 70 of the mixing device 7, and a fluid supply system 82, for supplying the urea solution to the nozzle 81. The mixture of the urea solution with exhaust gases occurs in the mixing device 7, in particular in the volume of the injection space 70. Thus, injection means 8 are arranged to inject a urea solution in the form of a urea flow 12 sprayed inside the injection space 70.

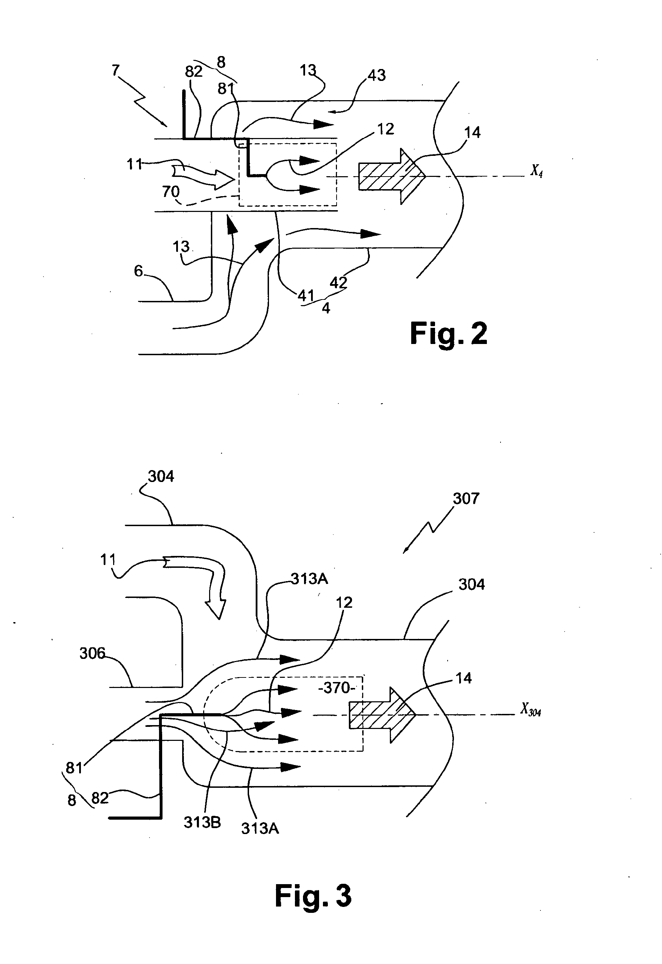

In the embodiment of figure 2, the exhaust conduit 4 comprises a first pipe 41 and a second pipe 42. The first pipe 41 is connected to the turbine outlet 9 visible on figure 1. The second pipe 42 is connected to the bypass duct 6. As can be seen on figure 2, the first pipe 41 has smaller length and section than the second pipe 42. Furthermore, a downstream part of the first pipe 41 is surrounded by the second pipe 42. In other words, the first pipe 41 is partly contained in the second pipe 42. Accordingly, the first pipe 41 and the second pipe 42 delimit a clearance 43, which surrounds the first pipe 41. In this embodiment, the nozzle is located inside the first pipe 41, on the axis of said pipe, so that the injection space 70 is defined by the walls of the first pipe 41, and the clearance 43 forms a surrounding space around said injection space. With such an arrangement, the injection space and the surrounding space are physically separated, here by the walls of pipe 41.

In the embodiment of Figure 2, the first pipe 41 is connected with an outlet of the turbine, so that the main portion of exhaust gases flows in said the pipe, and therefore in the injection space 70. As can be seen on figure 2, the nozzle 81 injects a urea flow 12 inside the injection space 70. Urea flow 12 mixes there with the turbine outlet flow 11, which corresponds to the main portion of exhaust gases which flow out of the turbine 3. This mixture results in a mixed flow 14, which then flows out of the injection space 70.

On the other hand, the second pipe 42 is connected to the bypass duct 6, so that the bypass flow 13 passes through the clearance 43. Accordingly, the bypass duct 6 discharges the bypass flow 13 around the injection space 70.

In the example of figure 2, the first pipe 41 and the second pipe 42 have cylindrical shapes to avoid any high pressure drops and heat transfers. Besides, the first pipe 41 and the second pipe 42 are coaxial, thus permitting the bypass flow 13 to circulate all around the first pipe 41, hence all around the injection space 70. Clearance 43 has an annular cross-section. This coaxial arrangement of first pipe 41 and second pipe 42 also promotes a uniform heating-up of the pipe 41 walls.

In the example, the nozzle 81 is located upstream of a downstream extremity of the first pipe 41. In such a case, the injection space can be considered as extending from the nozzle to the downstream extremity of the first pipe 41.

In operation, when the internal combustion engine runs at low temperatures, e.g. after a cold start or at small engine torques, the turbine outlet flow 11 can be relatively cold, say at 300°C. The bypass valve 61 can be switched into the open position. The bypass flow 13 hence circulates along bypass duct 6 and around the first tube 41. The temperature of bypass flow 13, say 400°C, is higher than the temperature of turbine outlet flow 11. Indeed, the expansion of exhaust gases flowing in the turbine 3 significantly decreases their temperature and their pressure.

Consequently, bypass flow 13 heats up the walls of first tube 41 and the volume of the injection space 70. Hence, the mixed flow 14 reaches a temperature, say 350°C, higher than the temperature of the turbine outlet flow 11. The present embodiment thus permits to limit the risk of crystallization of urea on the walls of the exhaust conduit 4, in particular on the walls of the first tube 41 by increasing the wall temperature around the volume of the injection space 70. Furthermore, the thermal inertia of the walls of first tube 41 helps to keep the injection space 70 warm. When the turbine outlet flow is hot enough, the bypass valve can be closed, or at least significantly closed, except if bypassing of the turbine by part of the exhaust gases is needed for other reasons, such as for avoiding any overloading or over speeding of the turbine.

In this first embodiment, the by-pass flow prevents the walls of pipe 41, inside which the urea is injected, from being cooled down by the exterior air. Also, downstream of the outlet of the inner pipe 41, the by-pass flow forms, at least to a certain extent, a tubular sheath of relatively hot gases surrounding the flow of the mixture of urea and turbine exhaust gases. Of course, both flows tend to finally mix downstream of the injection space. The mixed flow 14 then moves to a catalytic unit, not shown, before the exhaust gases are released into the atmosphere.

In the embodiment represented on Figure 2, the bypass portion of exhaust gases 13 are injected in said second pipe substantially tangentially. Such arrangement tends to favor a helical path of the bypass gases around axis X₄, forming a so-called "swirl" as in a so-called "swirl-box". Such swirl may be favorable to the mixing of the two flows downstream of the first pipe. Nevertheless, in a non represented first variant, the bypass portion of the exhaust gases could be injected along a direction parallel to axis X₄ inside the second pipe 42.

In a further variant of the embodiment of Figure 2 or of its first variant, the first pipe 41 could be connected to the bypass duct 6 while the clearance 43 forming the surrounding space could be connected to the outlet of the turbine. In such a variant, the walls of pipe 41 which physically define the injection space 70 would still be very well isolated from the exterior air, and the walls of pipe 41 would therefore remain at a relatively high temperature, thereby reducing the risk of condensation of urea on those walls. On the other hand, the urea would be injected in an injection space where the gas temperatures would be even higher, thanks to the flow of bypass gases. This would promote an even better vaporization and decomposition of the urea.

Figure 3 depicts a sub-assembly of an exhaust line assembly 1 according to a second embodiment. The essential parts of figure 3 have structures and/or functions, which are quite similar to the structures and/or functions of the corresponding parts of figure 2. The description given above in relation with figure 2 can be transposed to figure 3, except for the hereafter stated differences.

Most reference numerals of figure 3 are identical to reference numerals of the corresponding parts illustrated on figure 2. The remaining reference numbers of figure 3 can be derived, by adding 300 to it, from the reference numerals of parts having the corresponding structure and/or function on figure 2. One can thus define an exhaust conduit 304, a bypass duct 306, a mixing device 307, a injection space 370 and a bypass flow 313.

The exhaust line assembly of figure 3 differs from the exhaust line assembly of figure 2, because the exhaust conduit 304 is made of a single pipe. The exhaust conduit 304 is connected to the outlet 9 of the turbine 3. Besides, the mixing device 307 differs from the mixing device 7, because the injection space 370 is defined in the single pipe forming the exhaust conduit 304.

The injection space 370 differs from the injection space 70, because the injection space 370 is not defined by the walls of a tube. Instead, the injection space 370 is defined, in the exhaust conduit 304, by a space or volume enveloping the injection pattern of urea. Conveniently, the urea is not injected directly onto the walls of the conduit 304, but preferably along the axis X₃₀₄ thereof. Thereby, there remains, around the injection space 370, a surrounding space.

In this second embodiment, the downstream part of the bypass conduit 306 is arranged to discharge a bypass flow 313, representing a bypass portion of exhaust gases, around the nozzle 81, preferably coaxially therewith. Accordingly, the bypass duct 306 discharges at least part of the bypass flow 313 directly in the injection space 370. Depending on the settings, as shown on Figure 3, a surrounding part 313A of the bypass flow 313 may be discharged around the injection space 370, while a central part 313B of the bypass flow 313 discharges directly into the injection space 370. The surrounding part 313A flows around the nozzle 81 and around the injection space 370. The central part 313B directly mixes with urea flow 12.

In the mean time, the main portion of the exhaust gases tends to flow in the surrounding space, around the injection space, thereby insulating the injection space from the walls of the pipe 304 which are in contact with exterior air.

In this embodiment, it must be noted that the injection space and the surrounding space are not physically separated as by a wall. Therefore, a certain degree of mixture between the flows in the injection space and in the surrounding space will occur. Nevertheless, with this embodiment, it is possible to maintain a higher temperature in the injection space than in the surrounding space, thereby promoting urea vaporization and decomposition.

In the embodiment of Figure 3, the portion of the exhaust conduit 304 which forms the mixing device 307 exhibits an enlarged section around the injection space, and the main portion of exhaust gases 11 are injected in said mixing device substantially tangentially. Such arrangement tends to favor a helical of the turbine outlet-flow 11 path around axis X₃₀₄, forming a so-called "swirl" as in a so-called "swirl-box". In this embodiment of the invention, the swirl tends to be generated around the axial flow of the bypass portion of exhaust gases 313.

In a non represented first variant of the embodiment of Figure 3, the main portion of the exhaust gases could be injected along a direction parallel to axis X₃₀₄ all around the injection space, therefore in parallel to, and around of, the flow of the bypass portion of exhaust gases.

In operation, when the internal combustion engine runs at low temperatures, e.g. after a cold start or at small engine torques, the turbine outlet flow 11 can be relatively cold, say at 300°C. The bypass valve 61 can then be switched into the open position. The bypass flow 313 hence circulates along bypass duct 306 and into the injection space 370. The temperature of bypass flow 313, say 400°C, is higher than the temperature of turbine outlet flow 11, say 300°C. Consequently, bypass flow 313 heats up the volume of the injection space 370. Hence, the mixed flow 14 reaches a temperature, say 350°C higher than the temperature of the turbine outlet flow 11. The present invention thus permits to limit the crystallization of urea on the walls of the exhaust conduit 304, thereby enhancing the urea decomposition into ammonia. Of course, the two flows of exhaust gases eventually mix together downstream of the injection space. The mixed flow 14 then moves to a catalytic unit, not shown, before the exhaust gases are released into the atmosphere.

As with embodiment of Figure 2, a further variant of embodiment of Figure 3 or of its first variant could be provided with the main portion of exhaust gases being injected centrally in the injection space, and with the bypass portion of exhaust gases being injected in a surrounding space surrounding circumferentially the injection space.

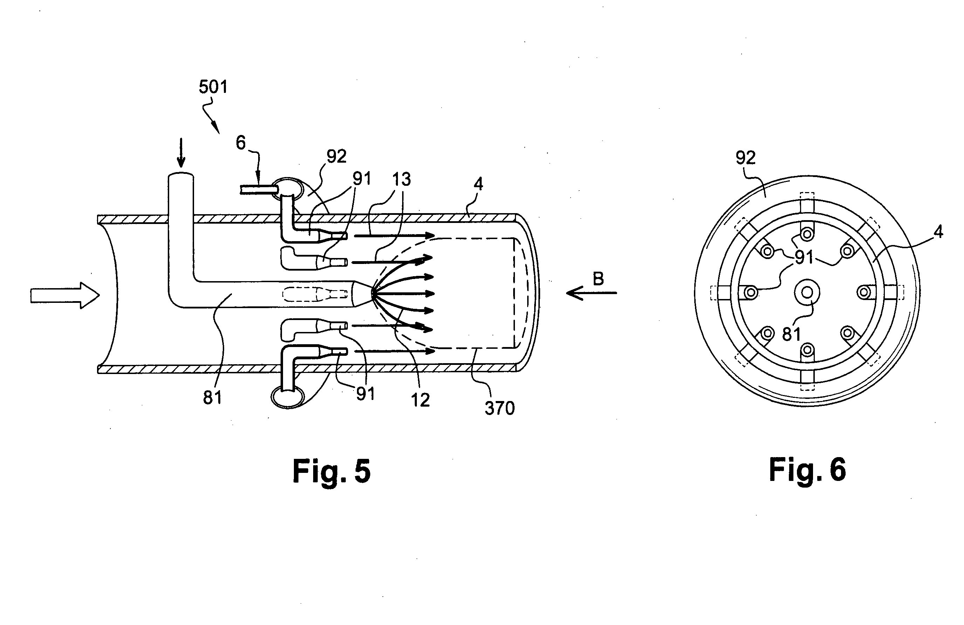

On figures 5 and 6 is represented a further embodiment of the invention. In this embodiment, as in the embodiment of figure 2, the assembly comprises an exhaust conduit 4 in which flows the turbine outlet flow 11 of exhaust gases. An injection nozzle 81 is located axially in the center of the exhaust conduit 4 to discharge a flow of urea along the axis of the conduit, thereby defining an injection space 370 which is not physically separated from the surrounding space. A number of nozzles 91 are arranged all around the periphery of the exhaust conduit for injecting exhaust gases coming from the bypass duct 6 into the exhaust conduit 4. The nozzles are for example all fed through an annular gallery 92 arranged around the exhaust conduit 4, said gallery 92 being itself fed by the bypass duct 6. The nozzles 91 are preferably arranged so as to inject the bypass flow 13 substantially parallel to the axis of the conduit 4, as close as possible to the wall of the exhaust duct 4. They are also preferably located axially close to the urea nozzle 81, for example at the same level. The nozzles 91 tend to create a tubular sheath of hot by-pass gases 13 surrounding the injection space 370 where most of the turbine outlet flow 11 will be concentrated and where the urea 12 is injected. Therefore, as in the embodiment of figure 2, the by-pass flow 13 flows essentially in a surrounding space around the injection space 370 and thereby tends to insulate the injection space 370 from direct heat exchange with the walls of the conduit 4 which may be exposed to a cold environment. On the other hand, similarly to the embodiment of figure 3, the injection space 370 and the surrounding space are not physically separated but may be demarcated by the distinct flow created by the series of nozzles 91. Of course, the design of the nozzles 91, such as their width, and their number will influence considerably on how the surrounding space will be demarcated in the exhaust conduit 4. Indeed, the more nozzles are provided, the more constant the bypass flow 13 around the periphery, so as to mimic the continuous peripheral flow provided with the embodiment of figure 2.

Figure 4 illustrates an exhaust line assembly 401 according to an alternative embodiment of the present invention. The essential parts of the exhaust line assembly 401 have structures and/or functions which are quite similar to the structures and/or functions of the corresponding part of exhaust line assembly 1 illustrated on figure 1. The description given above in relation with figure 1 can be transposed to figure 4, except for the hereafter stated differences.

Most of the reference numerals of the parts of exhaust line assembly 401 are identical to the reference numerals of the corresponding parts of exhaust line assembly 1. The remaining reference numerals of figure 4 can be derived, by adding 400 to it, from the reference numerals of the corresponding parts of figure 1. One can thus define a bypass duct 406.

The exhaust line assembly 401 differs from exhaust line assembly 1, because the bypass duct 406 is connected close to the turbine inlet 5, or even to the turbine inlet 5, instead of being connected to collecting duct 2.

Such a bypass duct 406 can also be termed a "waste gate" duct, the waste-gate being the valve 61. For example, an upstream part of the bypass duct 406 may be integral with the casing of turbine 3. Such a structure of the bypass duct 406 offers a compact structure.

According to not shown embodiments, the exhaust line assembly 401 can be implemented either with the sub-assembly illustrated on figure 2 or with the sub-assembly illustrated on figure 3 or on figures 5 and 6. In other words, while the upstream portion of bypass duct 406 connects close to the turbine inlet pipe or even to the turbine casing, the downstream portion of bypass duct 406 can be similar to the downstream portion either of bypass duct 6 or of bypass duct 306. The same effects and advantages as those described here-above in relation with figures 2, 3 and 5 can be achieved with such a not shown variant.

In cold conditions, on the one hand, the bypass portion will heat up directly or indirectly the temperature of gases inside the injection space. On the other hand, the bypass portion of exhaust gases increases the overall exhaust conduit temperature by decreasing the air mass flow supplied to the turbine. Both effects promote the urea vaporisation and limit the risk of urea crystallization.

An exhaust line assembly according the present invention permits to quickly and reliably reach a high temperature of the injection space and of its surrounding walls, thus promoting urea evaporation and decomposition and avoiding urea crystallization.

Indeed, the bypass portion of exhaust gases is delivered around the injection space, or directly into it so that the latter gets heated up. Besides, the bypass duct supplies a bypass flow to the exhaust line without significantly increasing the pressure drop.

In all the embodiments described above, it is taken profit of the higher temperature of the bypass portion of exhaust gases, and of their potentially higher pressure, to promote a better vaporisation and decomposition of the urea, and/or to limit condensation of urea droplet on the walls of the mixing device. In all cases, the intent is to create two flows of gases, one having a higher temperature than the other. These two gas flows are as separate as possible in terms of flow in the vicinity of the injection space, but nevertheless intimately close one to the other, preferably one surrounding the other, so that one of them is thermally protected from the environment by the other. The injection space is within the protected flow, for example the most central in case of a flow surrounding the other. A physical separation of the flows, as in the embodiment of Figure 2, will of course tend to increase the effectiveness of the system.

While the invention has been here above described in its application to the injection of an aqueous solution of urea in the exhaust line, it could also be applied to other exhaust assemblies with means for injecting other fluids, especially liquids, in said exhaust gases. For example, it is know that, in exhaust assemblies equipped with a dust particulate filter, it may be necessary at certain times to inject fuel in the exhaust gases in order to increase the temperature in the filter in view of its regeneration. The invention could be implemented in such assemblies, in order to similarly reduce the risk of fuel droplets condensing on the walls of the exhaust line.

## Claims

1. An exhaust line assembly (1 ; 401), for the treatment of exhaust gases produced in an internal combustion engine (E), said exhaust line assembly (1; 401,) comprising:
- a collecting duct (2) for collecting the exhaust gases of the internal combustion engine (E);
- a turbine (3) having a turbine inlet (5) connected to the collecting duct (2);
- an exhaust conduit (4) arranged to collect exhaust gases flowing out of the turbine (3);
- a bypass duct (6; 406) connected to the collecting duct (2) and to the exhaust conduit (4) so as to by-pass the turbine (3) and to derive a bypass portion (13 ; 313) of exhaust gases, while a main portion of exhaust gases flows through the turbine;
wherein said exhaust line assembly (1 ; 401) also comprises injection means (8) arranged to inject a fluid inside an injection space (70 ; 370),
**characterized in that** said injection space is defined in the exhaust conduit (4);
and **in that** a downstream part of the bypass duct (6 ; 406) discharges at least part of the bypass portion (13 ; 313) of exhaust gases in or around the injection space (70 ; 370).

2. An exhaust line assembly according to claim 1, wherein the injection space (70, 370) is surrounded by a surrounding space (43) in the exhaust conduit, and wherein the bypass portion (13, 313) and the main portion (11) of the exhaust gases are injected essentially separately each in one of said spaces.

3. An exhaust line assembly (1) according to claim 2, wherein the injection space and the surrounding space are physically separated.

4. An exhaust line assembly (1) according to any preceding claim, wherein the exhaust conduit (4) comprises a first pipe (41) and a second pipe (42), a downstream part of the first pipe (41) being surrounded by the second pipe (42) so that the first pipe (41) and the second pipe (42) delimit a surrounding space (43) for one of the bypass portion or of the main portion of the exhaust gases to pass through, the injection space (70) being defined by the walls of the first pipe (41).

5. An exhaust line assembly (1) according to claim 4, wherein the first pipe is connected to a turbine outlet (9) while the second pipe is connected to the bypass duct (6), whereby the main portion (11) of exhaust gases flows in the injection space while the bypass portion (13) flows in the surrounding space.

6. An exhaust line assembly according to claim 4, wherein the first pipe is connected to the bypass duct while the second pipe is connected to a turbine outlet, whereby the bypass portion of exhaust gases flows in the injection space while the main portion flows in the surrounding space.

7. An exhaust line assembly (1 ; 401) according to any of claims 4 to 6, wherein the first pipe (41) and the second pipe (42) have cylindrical shapes and are preferably coaxial.

8. An exhaust line assembly (1, 401) according to claim 2, wherein the injection space and the surrounding space are not physically separate but are demarcated by the essentially separate flows of the bypass portion and of the main portion of the exhaust gases in and around the injection space.

9. An exhaust line assembly (1 ; 401) according to claim 8, wherein the injection means (8) comprise a nozzle (81), the downstream part of the bypass duct (6 ; 406) being arranged to deliver the bypass portion (13 ; 313) around the nozzle (81).

10. An exhaust line assembly (1, 401) according to claim 9, wherein the main portion of exhaust gases is injected around the flow of the bypass portion substantially coaxially with the flow of the bypass portion and with the flow of urea injected by the nozzle 81.

11. An exhaust line assembly (1, 401) according to claim 9, wherein the main portion of exhaust gases is injected so as to create a swirl flow around the flow of the bypass portion of exhaust gases.

12. An exhaust line assembly according to claim 8, wherein the injection means comprise a nozzle (81) located axially in the exhaust duct (4) where the main portion (11) of exhaust gases flows, and wherein a series of nozzles (91) is arranged all around in the exhaust conduit to deliver the bypass portion (13) around the injection space.

13. An exhaust line assembly (1 ; 401) according to any preceding claim, wherein a valve (61) is mounted onto the bypass duct (6 ; 406) so as to control the flow of the bypass portion (13 ; 313) therein.

14. An exhaust line assembly (1 ; 401) according to any preceding claim, wherein the bypass duct (6 ; 406) is connected upstream of the turbine inlet (5), the bypass duct (6 ; 406) being formed of a pipe distant from the turbine (3), or wherein the bypass duct (406) is connected close to the turbine inlet (5), an upstream part of the bypass duct (406) being integral with a casing of the turbine (3).

15. Internal combustion engine system (S) having an internal combustion engine (E), **characterized in that** it is equipped with an exhaust line assembly (1; 401) according to any preceding claim.

## Patentansprüche

1. Abgasleitungsanordnung (1; 401) für die Behandlung von Abgasen, die in einem Verbrennungsmotor (E) erzeugt werden, wobei die Abgasleitungsanordnung (1; 401) umfasst:
- eine Sammelleitung (2) zur Sammlung der Abgase des Verbrennungsmotors (E);
- eine Turbine (3), die einen Turbineneinlass (5) aufweist, der mit der Abgasleitung (2) verbunden ist;
- eine Abgasleitung (4), die zur Sammlung von Abgasen angeordnet ist, die aus der Turbine (3) strömen;
- eine Bypassleitung (6; 406), die mit der Sammelleitung (2) und mit der Abgasleitung (4) verbunden ist, um die Turbine (3) zu umgehen und einen Bypassteil (13; 313) des Abgases abzuzweigen, während ein Hauptteil der Abgase durch die Turbine strömt,
- wobei die Abgasleitungsanordnung (1; 401) außerdem eine Einspritzeinrichtung (8) umfasst, die zur Einspritzung eines Fluids in einen Einspritzraum (70; 370) angeordnet ist;
**dadurch gekennzeichnet,**
- **dass** der Einspritzraum in der Abgasleitung (4) gebildet ist; und
- **dass** ein stromabwärtiger Abschnitt der Bypassleitung (6; 406) wenigstens einen Teil des Bypassteils (3; 313) der Abgase in oder um den Einspritzraum (70; 370) abführt.

2. Abgasleitungsanordnung nach Anspruch 1, wobei der Einspritzraum (70; 370) von einem Umgebungsraum (43) in der Abgasleitung umgeben wird, und wobei der Bypassteil (13; 313) und der Hauptteil (11) der Abgase im Wesentlichen getrennt in jeden der Räume eingespritzt werden.

3. Abgasleitungsanordnung (1) nach Anspruch 2, wobei der Einspritzraum und der Umgebungsraum physisch getrennt sind.

4. Abgasleitungsanordnung (1) nach irgendeinem vorhergehenden Anspruch, wobei die Abgasleitung (4) ein erstes Rohr (41) und ein zweites Rohr (42) umfasst, wobei ein stromabwärtiger Teil des ersten Rohrs (41) durch das zweite Rohr (42) so umgeben ist, dass das erste Rohr (41) und das zweite Rohr (42) einen Umgebungsraum (43) für einen von dem Bypassteil oder dem Hauptteil der Abgase zur Durchströmung begrenzen, wobei der Injektionsraum (70) von den Wänden des ersten Rohrs (41) gebildet wird.

5. Abgasleitungsanordnung (1) nach Anspruch 4, wobei das erste Rohr mit einem Turbinenauslass (9) verbunden ist, während das zweite Rohr mit der Bypassleitung (6) verbunden ist, wobei der Hauptteil (11) der Abgase in den Injektionsraum strömt, während der Bypassteil (13) in den Umgebungsraum strömt.

6. Abgasleitungsanordnung nach Anspruch 4, wobei das erste Rohr mit der Bypassleitung verbunden ist, während das zweite Rohr mit einem Turbinenauslass verbunden ist, wobei der Bypassteil der Abgase in dem Injektionraum strömt, während der Hauptteil in dem Umgebungsraum strömt.

7. Abgasleitungsanordnung (1; 401) nach einem der Ansprüche 4 bis 6, wobei das erste Rohr (41) und das zweite Rohr (42) eine zylindrische Form aufweisen und vorzugsweise koaxial sind.

8. Abgasleitungsanordnung (1; 401) nach Anspruch 2, wobei der Injektionsraum und der Umgebungsraum nicht physisch getrennt sind, sondern durch im Wesentlichen separate Strömungen des Bypassteils des Hauptteils der Abgase in und um den Injektionsraum abgegrenzt sind.

9. Abgasleitungsanordnung (1; 401) nach Anspruch 8, wobei die Einspritzeinrichtung (8) eine Düse (81) umfasst, wobei der stromabwärtige Abschnitt der Bypassleitung (6; 406) so angeordnet ist, dass der Bypassteil (13; 313) um die Düse (81) zuführt wird.

10. Abgasleitungsanordnung (1; 401) nach Anspruch 9, wobei der Hauptteil der Abgase um die Strömung des Bypassteils im Wesentlichen koaxial zu der Strömung des Bypassteils und zu der Strömung von durch die Düse (81) eingespritztem Harnstoff eingespritzt wird.

11. Abgasleitungsanordnung (1; 401) nach Anspruch 9, wobei der Hauptteil der Abgase so eingespritzt wird, dass eine Wirbelströmung um die Strömung des Bypassteils der Abgase erzeugt wird.

12. Abgasleitungsanordnung nach Anspruch 8, wobei die Einspritzeinrichtung eine Düse (81) umfasst, die axial in der Abgasleitung (4) dort angeordnet ist, wo der Hauptteil (11) der Abgase strömt, und wobei eine Reihe von Düsen (91) ganz um die Abgasleitung herum angeordnet ist, um den Bypassteil (13) um den Injektionsraum zuzuführen.

13. Abgasleitungsanordnung (1; 401) nach irgendeinem vorhergehenden Anspruch, wobei ein Ventil (61) auf der Bypassleitung (6; 406) angebracht ist, um die Strömung des Bypassteils (13; 313) darin zu steuern.

14. Abgasleitungsanordnung (1; 401) nach irgendeinem vorhergehenden Anspruch, wobei die Bypassleitung (6; 406) stromaufwärts des Turbineneinlasses (5) angeschlossen ist, wobei die Bypassleitung (6; 406) von einem von der Turbine (3) beabstandeten Rohr gebildet wird, oder wobei die Bypassleitung (406) in der Nähe des Turbineneinlasses (5) angeschlossen ist, wobei ein stromaufwärtiger Abschnitt der Bypassleitung (406) mit einem Gehäuse der Turbine (3) einen Teil bildet.

15. Verbrennungsmotorsystem (S) mit einem Verbrennungsmotor (E), **dadurch gekennzeichnet, dass** es mit einer Abgasleitungsanordnung (1; 401) nach irgendeinem vorhergehenden Anspruch ausgestattet ist.

## Revendications

1. Ensemble de ligne d'échappement (1 ; 401), pour le traitement de gaz d'échappement produits dans un moteur à combustion interne (E), ledit ensemble de ligne d'échappement (1 ; 401) comprenant :
- un conduit de collecte (2) servant à collecter les gaz d'échappement du moteur à combustion interne (E) ;
- une turbine (3) comportant une entrée de turbine (5) raccordée au conduit de collecte (2) ;
- une conduite d'échappement (4) conçue pour collecter les gaz d'échappement s'écoulant hors de la turbine (3) ;
- un conduit de dérivation (6 ; 406) raccordé au conduit de collecte (2) et à la conduite d'échappement (4) de façon à contourner la turbine (3) et à détourner une portion de dérivation (13 ; 313) des gaz d'échappement, tandis qu'une portion principale des gaz d'échappement s'écoule à travers la turbine ;
ledit ensemble de ligne d'échappement (1 ; 401) comprenant également des moyens d'injection (8) conçus pour injecter un fluide à l'intérieur d'un espace d'injection (70 ; 370),
**caractérisé en ce que** ledit espace d'injection est défini dans la conduite d'échappement (4) ;
et **en ce qu'**une partie en aval du conduit de dérivation (6 ; 406) rejette au moins une partie de la portion de dérivation (13 ; 313) des gaz d'échappement dans ou autour de l'espace d'injection (70 ; 370).

2. Ensemble de ligne d'échappement selon la revendication 1, dans lequel l'espace d'injection (70, 370) est entouré par un espace périphérique (43) dans la conduite d'échappement, et dans lequel la portion de dérivation (13, 313) et la portion principale (11) des gaz d'échappement sont injectées essentiellement séparément, chacune dans l'un desdits espaces.

3. Ensemble de ligne d'échappement (1) selon la revendication 2, dans lequel l'espace d'injection et l'espace périphérique sont séparés physiquement.

4. Ensemble de ligne d'échappement (1) selon l'une quelconque des revendications précédentes, dans lequel la conduite d'échappement (4) comprend un premier tuyau (41) et un second tuyau (42), une partie en aval du premier tuyau (41) étant entourée par le second tuyau (42) de telle sorte que le premier tuyau (41) et le second tuyau (42) délimitent un espace périphérique (43) destiné à être traversé par l'une de la portion de dérivation et de la portion principale des gaz d'échappement, l'espace d'injection (70) étant défini par les parois du premier tuyau (41).

5. Ensemble de ligne d'échappement (1) selon la revendication 4, dans lequel le premier tuyau est raccordé à une sortie de turbine (9) tandis que le second tuyau est raccordé au conduit de dérivation (6), la portion principale (11) des gaz d'échappement s'écoulant ainsi dans l'espace d'injection alors que la portion de dérivation (13) s'écoule dans l'espace périphérique.

6. Ensemble de ligne d'échappement selon la revendication 4, dans lequel le premier tuyau est raccordé au conduit de dérivation tandis que le second tuyau est raccordé à une sortie de turbine, la portion de dérivation des gaz d'échappement s'écoulant ainsi dans l'espace d'injection alors que la portion principale s'écoule dans l'espace périphérique.

7. Ensemble de ligne d'échappement (1 ; 401) selon l'une quelconque des revendications 4 à 6, dans lequel le premier tuyau (41) et le second tuyau (42) présentent des formes cylindriques et sont de préférence coaxiaux.

8. Ensemble de ligne d'échappement (1, 401) selon la revendication 2, dans lequel l'espace d'injection et l'espace périphérique ne sont pas physiquement distincts mais sont délimités par les flux essentiellement distincts de la portion de dérivation et de la portion principale des gaz d'échappement dans et autour de l'espace d'injection.

9. Ensemble de ligne d'échappement (1 ; 401) selon la revendication 8, dans lequel les moyens d'injection (8) comprennent une buse (81), la partie en aval du conduit de dérivation (6 ; 406) étant conçue pour distribuer la portion de dérivation (13 ; 313) autour de la buse (81).

10. Ensemble de ligne d'échappement (1, 401) selon la revendication 9, dans lequel la portion principale des gaz d'échappement est injectée autour du flux de la portion de dérivation, de manière essentiellement coaxiale avec le flux de la portion de dérivation et avec le flux d'urée injecté par la buse (81).

11. Ensemble de ligne d'échappement (1, 401) selon la revendication 9, dans lequel la portion principale des gaz d'échappement est injectée de façon à créer un flux tourbillonnant autour du flux de la portion de dérivation des gaz d'échappement.

12. Ensemble de ligne d'échappement selon la revendication 8, dans lequel les moyens d'injection comprennent une buse (81) disposée axialement dans la conduite d'échappement (4) à l'endroit où s'écoule la portion principale (11) des gaz d'échappement, et dans lequel une série de buses (91) est agencée tout autour dans la conduite d'échappement afin de distribuer la portion de dérivation (13) autour de l'espace d'injection.

13. Ensemble de ligne d'échappement (1 ; 401) selon l'une quelconque des revendications précédentes, dans lequel une soupape (61) est installée sur le conduit de dérivation (6 ; 406) de façon à réguler le flux de la portion de dérivation (13 ; 313) dans celui-ci.

14. Ensemble de ligne d'échappement (1 ; 401) selon l'une quelconque, des revendications précédentes, dans lequel le conduit de dérivation (6 ; 406) est raccordé en amont de l'entrée de turbine (5), le conduit de dérivation (6 ; 406) étant constitué d'un tuyau éloigné de la turbine (3), ou dans lequel le conduit de dérivation (406) est raccordé à proximité de l'entrée de turbine (5), une partie en amont du conduit de dérivation (406) faisant partie intégrante d'un carter de la turbine (3).

15. Système de moteur à combustion interne (S) comportant un moteur à combustion interne (E), **caractérisé en ce qu'**il est équipé d'un ensemble de ligne d'échappement (1 ; 401) selon l'une quelconque des revendications précédentes.
